# FASCICULE DE BREVET EUROPEEN

(11) **EP 1 518 771 B1**
(45) Date de publication et mention de la délivrance du brevet: **15.11.2006**
(21) Numéro de dépôt: 04021911.5
(22) Date de dépôt: 15.09.2004
(51) Int. Cl.: B60T 11/232

(54) **Maître-cylindre pour circuit de freinage**
Hauptzylinder für Bremskreislauf
Master cylindre for brake circuit

(30) Priorité: 23.09.2003 FR 0311168
(43) Date de publication de la demande: 30.03.2005
(73) Titulaire: ROBERT BOSCH GMBH, 70442 Stuttgart (DE)
(72) Inventeur: Pujol, Hervé, 93310 Le Pré St. Gervais (FR); Aquino, Serge, 93110 Rosny Sous Bois (FR); Noblet, Marc, 75014 Paris (FR); Carles, Francisco, 95470 Saint Witz (FR); Fausten, Thierry, 93290 Tremblay en France (FR)
(74) Mandataire: Hurwic, Aleksander Wiktor

(56) Documents cités:
- FR-A- 1 553 933
- US-A- 4 773 224
- US-A- 5 179 834

## Description

La présente invention se rapporte principalement à un maître cylindre pour système de freinage.
Il est connu de l'état de la technique des maître cylindre dits à clapets comportant un circuit primaire et un circuit secondaire reliés respectivement à deux freins disposés au niveau des roues d'un véhicule automobile (voir par exemple US 5,179,834). Chacun des circuits est raccordé de manière étanche à un réservoir de liquide de frein qui alimente une chambre de travail par l'intermédiaire d'une chambre d'alimentation. Chacun des circuits comporte un piston muni lui même d'un clapet apte à séparer hermétiquement la chambre de travail de la chambre d'alimentation lors d'une phase de freinage. Le clapet est composé d'un obturateur monté à coulissement dans un passage axial du piston raccordant la chambre d'alimentation et la chambre de travail, et un élément d'appui commandant l'ouverture et la fermeture dudit clapet. Dans le circuit primaire, l'élément d'appui, par exemple une goupille, est monté flottant, et dans le circuit secondaire, l'élément d'appui est monté fixe dans le corps du maître cylindre.
L'alimentation du circuit secondaire par le réservoir s'effectue par l'intermédiaire d'un piquage réalisé dans la partie supérieure du corps du maître cylindre, et le montage de la goupille dans le circuit secondaire s'effectue par ledit piquage, une extrémité supérieure de la goupille débouchant dans ledit piquage.
De manière connue, pour maintenir en place la goupille, en particulier pour éviter que la goupille ne s'échappe du corps du maître cylindre lors de la manipulation du maître cylindre avant montage sur le véhicule automobile, il est prévu une rondelle de diamètre sensiblement égal au diamètre du piquage et venant s'interposer entre l'extrémité supérieure de la goupille et l'extrémité inférieure d'un manchon d'étanchéité destiné à recevoir une pipe du réservoir par laquelle s'écoule le liquide de frein dans le circuit secondaire. La rondelle est ajourée afin de permettre l'écoulement du liquide de frein du réservoir dans le circuit secondaire.
Dans le domaine de la construction automobile, le problème de poids des éléments constituant un véhicule automobile est un problème récurant . On recherche les solutions permettant de diminuer le poids des éléments permettant de réduire la consommation en carburant du véhicule automobile. Pour cela on réalise en particulier le piston secondaire en matière plastique où en alliage d'aluminium. En plus de réduire le poids du piston, l'utilisation d'éléments moulés permet de réduire également le coût de ces éléments puisque les étapes d'usinage qui sont très coûteuses, sont éliminées. Cependant un piston en matière plastique n'est pas comparable au niveau des caractéristiques mécaniques à un piston classique en particulier lors d'un déplacement maximal du piston secondaire, celui-ci vient habituellement en butée contre le fonds du corps du maître cylindre. Ce qui est susceptible de détériorer l'extrémité avant du piston en plastique. Pour résoudre ce problème, on a proposé un maître cylindre comportant un piston secondaire venant en butée sur la goupille lors d'un déplacement maximum du piston. Ceci requiert en ce qui concerne la fixation ou l'immobilisation de la goupille par rapport au corps du maître cylindre une tenue mécanique importante. C'est à dire que les épaisseurs des matières constituant les logements de réception des extrémités de la goupille et immobilisant celles ci longitudinalement par rapport au piston doivent être relativement importantes par rapport à celles d'un maître cylindre classique.
Or, certains conducteurs pour des raisons d'encombrement dans le compartiment moteur exigent d'avoir un réservoir de liquide de frein ayant une position plus basse que les réservoirs de liquide de frein classiques. Afin de pouvoir conserver le même volume de liquide de frein dans le réservoir, il est proposé de réduire l'épaisseur de la fonderie recevant les piquages et dans lequel le maître cylindre est emmanché. Cependant, comme il n'est pas possible de réduire de manière trop conséquente l'épaisseur du logement de réception de l'extrémité supérieure de la goupille puisqu'il sert également de moyen d'immobilisation longitudinale de ladite goupille, il a été proposé de supprimer la rondelle de retenue transversale de la goupille. Ainsi, il est possible de conserver l'épaisseur de la fonderie au niveau du logement de réception de l'extrémité supérieure de la goupille et en même temps de réduire l'épaisseur du piquage. Mais le maître cylindre ne comporte plus de moyens pour retenir la goupille dans son logement avant le montage du maître cylindre sur le véhicule. Il a alors été proposé de monter à force ou monter serrée au moins une extrémité de la goupille dans le corps du maître cylindre, avantageusement l'extrémité inférieure de la goupille afin de la maintenir en position avant le montage final sur le véhicule automobile. Cependant, le maître cylindre est monté sur le véhicule automobile, il est possible que les vibrations dues au déplacement du véhicule et au fonctionnement du moteur provoquent une progression transversale de la goupille tendant à la faire s'échapper du logement dans lequel elle est montée à force. Ce qui à terme peut provoquer une détérioration du corps de maître-cylindre et une augmentation de la course morte, mais sans pour autant créer une situation dangereuse.

La présente invention a par conséquent pour but d'offrir un maître cylindre permettant d'avoir un réservoir de liquidé de frein dans une position plus basse que les réservoirs actuels mais assurant également une grande sécurité de fonctionnement.

C'est également le but de la présente invention d'offrir un maître cylindre en position de réservoir abaissé d'un prix de revient faible et de réalisation simple.

Les buts précédemment décrits sont atteints par un maître cylindre comportant une goupille apte à avoir une première position au moins avant montage du maître cylindre sur le véhicule automobile et avoir une deuxième position après montage du maître cylindre sur le véhicule automobile.
En d'autres termes, la goupille du maître cylindre est montée serrée au moins tant que le maître cylindre n'est pas monté sur le véhicule, puis, si la goupille s'échappe de son emmanchement serré, celle-ci est retenue dans une position assurant une sécurité de fonctionnement maximale,

La présente invention a également pour objet un maître cylindre comportant un corps d'axe longitudinal, un premier et un deuxième circuit hydraulique comportant respectivement un piston primaire, un piston secondaire, un dispositif à clapets primaire et un dispositif à clapet secondaire, lesdits dispositifs à clapet étant destinés à isoler hermétiquement une chambre de travail raccordée à des freins d'une chambre d'alimentation raccordée à un réservoir de liquide de frein, lesdits dispositifs de clapet. comportant un obturateur monté mobile dans un alésage axial du piston et un élément d'appui destiné à l'ouverture / fermeture dudit clapet ledit élément d'appui étant maintenu serré dans le corps du maître cylindre par une première extrémité caractérisé en ce que le maître cylindre comporte des moyens aptes à empêcher la progression transversale par rapport à l'axe du maître cylindre due aux vibrations du moyen d'appui au delà d'une position limite.

La présente invention a également pour objet un maître cylindre caractérisé en ce que l'élément d'appui est maintenu dans une première position par un montage à force dans une cavité du corps du maître cylindre et en ce que l'élément d'appui dans sa deuxième position est maintenu sans jeu dans une deuxième partie de la cavité du maître cylindre.

La présente invention a également pour objet un servomoteur caractérisé en ce que la cavité est sensiblement cylindrique et d'axe orthogonal à l'axe du maître cylindre.

La présente invention a également pour objet un maître cylindre caractérisé en ce que l'élément d'appui est une goupille.

La présente invention a également pour objet un maître cylindre caractérisé en ce que la goupille comporte à une première extrémité montée à force dans la première partie de la cavité une forme arrondie de manière à ce que le montage à force de la première extrémité de la goupille dans la cavité ne provoque pas d'usure de la cavité.

La présente invention a également pour objet un maître cylindre caractérisé en ce que le piston secondaire réalisé par moulage et en ce que la goupille forment une butée d'arrêt du piston secondaire lors d'un déplacement maximum du piston secondaire lors d'une phase de freinage.

La présente invention a également pour objet un maître cylindre caractérisé en ce que le piston secondaire est réalisé en matière plastique.

La présente invention a également pour objet un maître cylindre caractérisé en ce que le piston secondaire est réalisé en alliage d'aluminium.

La présente invention a principalement pour avantage d'être de réalisation très simple, de pouvoir s'adapter à tout type de maître cylindre et pas exclusivement à des maîtres cylindre comportant des pistons plastiques venant en butée contre la goupille d'ouverture et de fermeture du clapet. En effet, la suppression de la rondelle de retenue permet pour tous types de maîtres cylindre de réduire le nombre de pièces composant le maître cylindre et par conséquent, d'une part de réduire le poids, d'autre part d'en réduire le prix de revient et également de faciliter la gestion des références de pièces à utiliser pour la fabrication d'un maître cylindre.
La présente invention sera mieux comprise à la lumière de la description qui suit et des dessins pour lesquels l'avant et l'arrière correspondent respectivement à la gauche et à la droite et le haut et le bas à la partie supérieure et la partie supérieure des dessins et sur lesquels :
- La figure 1 est une vue en coupe longitudinale d'un maître cylindre selon la présente invention.

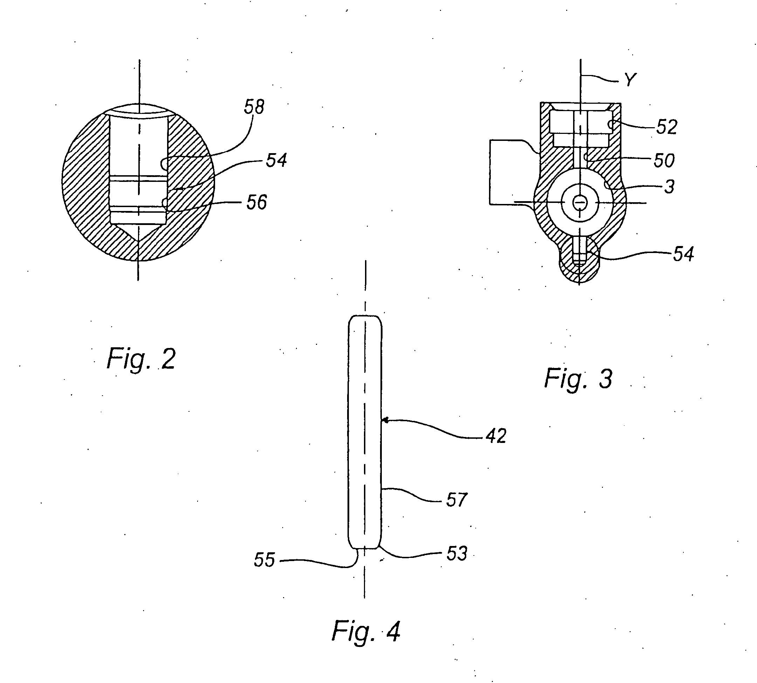

- La figure 2 est une vue de détails de la figure 1.
- La figure 3 est une vue en coupe transversale du maître cylindre selon la présente invention.
- La figure 4 est une vue de détails d'un élément d'appui utilisé dans le maître cylindre de la figure 1.

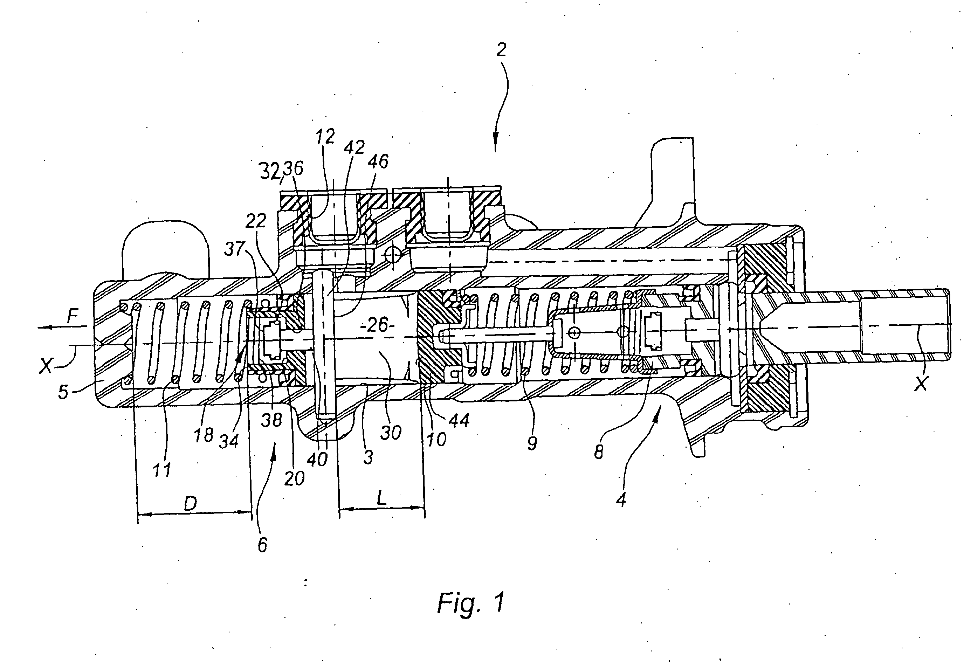

Sur la figure 1 on peut voir un maître cylindre selon la présente invention comportant un corps de maître cylindre 2 d'axe longitudinal X dans lequel est pratiqué un alésage coaxial à l'axe X, ledit alésage 3 étant obturé à une extrémité par un fond 5. On peut bien entendu prévoir un alésage 3 traversant obturé à une extrémité longitudinale par un bouchon rapporté monté par exemple par vissage ou par collage. Dans l'alésage 3 est monté à coulissement étanche un piston primaire 8 et un piston secondaire 10 définissant respectivement un circuit hydraulique primaire 4 et un circuit hydraulique secondaire 6.

Le maître-cylindre est commandé par une pédale de frein actionnée par un conducteur à partir d'un habitacle de véhicule automobile par l'intermédiaire d'une tige de commande. Un servomoteur d'assistance pneumatique au freinage est communément interposé entre la pédale de frein et le maître-cylindre, et transmet l'effort de freinage et d'assistance au piston primaire par une tige de poussée pénétrant dans une extrémité arrière du piston primaire.

Les pistons primaire et secondaire sont ramenés respectivement en position repos par un ressort de rappel primaire et secondaire 9,11. Le ressort de rappel primaire est monté entre une extrémité arrière du piston secondaire 10 et une extrémité avant du piston primaire 8. De manière avantageuse, la charge du ressort de rappel primaire est monté dans une cage de dimension longitudinale variable de dimension maximale prédéterminée et fixant la charge du ressort de rappel du piston primaire. La cage est montée en appui contre les pistons primaire et secondaire.

La présente invention s'appliquant avantageusement au circuit secondaire, nous ne décrirons que le circuit hydraulique secondaire, cependant il est bien entendu que la présente invention est susceptible de s'appliquer au piston primaire.

Le circuit hydraulique secondaire 6 comporté une chambre d'alimentation 26 raccordée par des moyens étanches 12 à un réservoir de liquide de frein (non représenté) et une chambre de pression 28 raccordée à des freins disposés au niveau de roues du véhicule automobile. La chambre d'alimentation 26 est délimitée par une lumière longitudinale 30 pratiquée dans le corps du piston 10 et l'alésage 3, et la chambre de pression 28 est délimitée par une extrémité longitudinale avant 34 du piston secondaire et le fond 5. La chambre d'alimentation est en communication avec la chambre de travail par un passage 36 pratiqué dans le piston 10 et obturé par un clapet 18 lors d'une application de freinage. Le clapet 18 comporte quant à lui un siège de clapet 20 porté par le piston et un obturateur 22 ramené élastiquement contre le siège de clapet par un ressort 38. L'obturateur 22 est en appui par l'intermédiaire d'une tige 40 contre un élément d'appui 42 monté fixe dans le corps du maître cylindre et traverse la lumière 32. L'élément d'appui 42 est par exemple une goupille cylindrique d'axe perpendiculaire à l'axe X du corps du maître cylindré et s'étendant de la partie inférieure du corps du maître cylindre vers la partie supérieure du corps du maître cylindre.

Le ressort 38 est avantageusement maintenu dans un logement 37 pratiqué dans le piston et dans lequel débouche le passage 36 au moyen d'une capuche monté à force à une extrémité avant du logement 37. La capuche est ajourée de manière à permettre l'écoulement du liquide de frein de la chambre d'alimentation à la chambre de travail.

Dans l'exemple représenté, l'élément d'appui 42 est une goupille cylindrique, mais il est bien entendu que tout élément d'appui de forme allongé peut convenir.
La goupille 42 est reçu dans le corps du maître cylindre par un premier passage 50 pratiqué dans la paroi supérieure du corps du maître cylindre entre un piquage 52 de réception d'un manchon d'alimentation du réservoir de liquide de frein et par une cavité cylindrique pratiquée dans la paroi inférieure du corps du maître cylindre. La goupille est montée dans le corps du maître cylindre selon un axe Y orthogonal à l'axe X du corps du maître cylindre. Selon la présente invention, la goupille est montée serrée par une première extrémité inférieure dans la cavité 54 du corps du maître cylindre. La deuxième extrémité supérieure selon l'axe Y de la goupille est montée dans l'alésage 50 avec un faible jeu.
Selon la présente invention, la cavité 54 comporte une première partie de plus petit diamètre 56 éloigné de l'alésage 3 et une deuxième partie 58 de plus grand diamètre raccordant l'alésage 3 du corps du maître cylindre selon l'axe X et la première partie 56.
Le diamètre de la première partie 56 est choisi de manière à ce que le montage de la première extrémité inférieure de la goupille dans la première partie 56 soit un montage à force. Le diamètre de la deuxième partie 58 est choisi légèrement supérieur au diamètre de la goupille de manière à ce que la goupille soit maintenue avec un faible jeu dans la deuxième partie 58. De manière avantageuse le diamètre de la deuxième partie 56 est sensiblement égal au diamètre du premier passage 50.

Selon un exemple de réalisation nullement limitatif de l'invention, le diamètre de la goupille est 5mm, le diamètre de la première partie 56 est 4,99mm et le diamètre de la deuxième partie est 5,1mm.

Selon la présente invention, lors de la fabrication du maître cylindre, la goupille 42 est positionnée dans la deuxième partie 58 puis montée à force dans la cavité 54 et en particulier dans la première partie 56, ainsi la goupille ne peut s'échapper du corps du maître cylindre lors de la manipulation de celui-ci au moment du montage du maître cylindre sur le véhicule ou lors du transport du maître cylindre. Par contre, lorsque le maître cylindre est installé sur le véhicule, les vibrations lors du fonctionnement du véhicule sont susceptibles de provoquer un déplacement selon l'axe Y vers le haut de la goupille du fait du montage serré de la première extrémité de la goupille dans la première partie 50. Cependant, cette progression axiale selon l'axe Y est interrompue par le fait que la première extrémité inférieure de la goupille va sortir de la première partie 50 après une certaine période de fonctionnement et se retrouver dans la deuxième partie 58 dans laquelle la goupille est uniquement maintenue avec un faible jeu mais sans être maintenue par serrage selon l'axe Y. Cependant, cela n'est pas gênant puisque le maître cylindre a une position fixée, et la goupille ne peut plus s'échapper du corps du maître cylindre, par exemple en retournant le maître cylindre autour de l'axe X.
La présente invention présente l'avantage d'être excessivement simple, applicable à tout type de maître cylindre et non uniquement à ceux comportant un piston classique contre lequel vient en appui le piston lors d'une course maximale du piston secondaire.
De plus, il permet de supprimer la rondelle de maintien généralement disposée dans le fonds du piquage 52 de réception du manchon de réservoir du liquide de frein.

Nous allons maintenant rapidement décrire une phase de fonctionnement du maître cylindre.
Lors d'une phase de freinage, le conducteur appuie sur la pédale de frein provoquant par l'intermédiaire d'une tige de poussée avantageusement actionnée par un servomoteur pneumatique d'assistance au freinage sur le piston primaire et sur le piston secondaire. Le déplacement du piston secondaire en direction du fonds du maître cylindre provoque l'éloignement de la tige 40 du clapet de la goupille 42, la fermeture du clapet et l'isolement de manière hermétique de la chambre de pression secondaire. La pression augmente alors dans la chambre secondaire, le liquide de frein sous pression étant envoyé au niveau des freins disposés au niveau des roues.
Lors d'une action de freinage maximale appliquée par le conducteur sur la pédale de frein, le piston secondaire vient en butée contre la goupille avant de venir en butée contre le fonds du maître cylindre, c'est par conséquent la goupille et le corps du maître cylindre qui supportent l'effort exercé par le conducteur sur la tige de poussée et sur le piston secondaire.

La présente invention s'applique principalement aux véhicules automobiles particuliers.

De manière avantageuse, la première extrémité inférieure de la goupille 42 est arrondie c'est à dire qu'une arête circulaire 53 reliant un fonds 55 de la goupille à une paroi cylindrique 57 de la goupille 42 est vue en coupe longitudinale en forme d'arc de cercle de manière à éviter une usure de la première partie 56 de la cavité 54 lors de la pénétration à force de la première extrémité de la goupille dans la cavité 56 et par la même d'éviter la formation de copeaux susceptibles d'être néfastes à l'étanchéité du coulissement du piston secondaire dans l'alésage principal 3.

La présente invention s'applique principalement aux véhicules automobiles.

## Revendications

1. Maître cylindre (2) comportant un corps d'axe longitudinal (X), un premier (4) et un deuxième (6) circuit hydraulique comportant respectivement un piston primaire (8), un piston secondaire (10), un dispositif à clapets primaire et un dispositif à clapet secondaire, lesdits dispositifs à clapet étant destinés à isoler hermétiquement une chambre de travail raccordée à des freins d'une chambre d'alimentation raccordée à un réservoir de liquide de frein, lesdits dispositifs de clapet comportant un obturateur (22) monté mobile dans un alésage (3) axial du piston (10) et un élément d'appui (42) destiné à l'ouverture / fermeture dudit clapet (18) ledit élément d'appui (42) étant maintenu serré dans le corps du maître cylindre (2) par une première extrémité **caractérisé en ce que** l'élément d'appui (42) est maintenu dans une première position par un montage à force dans une cavité (54) du corps du maître cylindre (2) et **en ce que** l'élément d'appui (42) dans une deuxième position est maintenu avec un faible jeu dans une deuxième partie (58) de la cavité (54) du maître cylindre (2) de manière à empêcher la progression transversale dudit élément d'appui (42) par rapport à l'axe du maître cylindre (2) due aux vibrations du moyen d'appui (42) au delà d'une position limite.

2. Maître-cylindre (2) selon la revendication 1 **caractérisé en ce que** la cavité (54) est sensiblement cylindrique et d'axe (Y) orthogonal à l'axe (X) du maître cylindre (2).

3. Maître cylindre (2) selon l'une quelconque des revendications précédentes **caractérisé en ce que** l'élément d'appui est une goupille (42).

4. Maître cylindre (2) selon la revendication précédente **caractérisé en ce que** la goupille (42) comporte à une première extrémité montée à force dans la première partie (56) de la cavité (54) une forme arrondie de manière à ce que le montage à force de la première extrémité de la goupille (42) dans la cavité (54) ne provoque pas d'usure de la cavité (54).

5. Maître cylindre selon l'une quelconque des revendications précédentes **caractérisé en ce que** le piston secondaire est réalisé par moulage et **en ce que** la goupille (42) forme une butée d'arrêt du piston secondaire (10) lors d'un déplacement maximum du piston secondaire (10) lors d'une phase de freinage.

6. Maître cylindre (2) selon la revendication précédente **caractérisé en ce que** le piston secondaire (10) est réalisé en matière plastique.

7. Maître cylindre (2) selon la revendication 5 **caractérisé en ce que** le piston secondaire (10) est réalisé en alliage d'aluminium.

## Claims

1. Master cylinder (2) comprising a body of longitudinal axis (x), a first (4) and a second (6) hydraulic circuit respectively comprising a primary piston (8), a secondary piston (10), a primary valve device and a secondary valve device, the said valve devices being intended to hermetically isolate a working chamber connected to brakes from a supply chamber connected to a brake fluid reservoir, the said valve devices comprising a shutter (22) mounted movably in an axial bore (3) of the piston (10) and a bearing element (42) intended for opening/closing the said valve (18), the said bearing element (42) being held clamped in the body of the master cylinder (2) by a first end, **characterized in that** the bearing element (42) is maintained in a first position by a force fit in a cavity (54) in the body of the master cylinder (2), and **in that** the bearing element (42), in a second position, is maintained with a slight clearance in a second part (58) of the cavity (54) of the master cylinder (2) so as to prevent the transverse progression of the said bearing element (42) with respect to the axis of the master cylinder (2) due to the vibrations of the bearing means (42) beyond a limiting position.

2. Master cylinder (2) according to Claim 1, **characterized in that** the cavity (54) is substantially cylindrical and its axis (Y) is orthogonal to the axis (X) of the master cylinder (2).

3. Master cylinder (2) according to either one of the preceding claims, **characterized in that** the bearing element is a pin (42).

4. Master cylinder (2) according to the preceding claim, **characterized in that** the pin (42) has, at a first end force-fitted in the first part (56) of the cavity (54), a rounded shape such that the force-fitting of the first end of the pin (42) in the cavity (54) does not produce any wear in the cavity (54).

5. Master cylinder according to any one of the preceding claims, **characterized in that** the secondary piston is produced by moulding, and **in that** the pin (42) forms a limit stop for the secondary piston (10) during a maximum displacement of the secondary piston (10) during a braking phase.

6. Master cylinder (2) according to the preceding claim, **characterized in that** the secondary piston (10) is made of plastic.

7. Master cylinder (2) according to Claim 5, **characterized in that** the secondary piston (10) is made of an aluminium alloy.

## Patentansprüche

1. Hauptzylinder (2) mit einem Körper mit der Längsachse (X), einem ersten Hydraulikkreis (4) und einem zweiten Hydraulikkreis (6), die einen Primärkolben (8) bzw. einen Sekundärkolben (10) und eine primäre Ventilelementvorrichtung bzw. eine sekundäre Ventilelementvorrichtung aufweisen, wobei die Ventilelementvorrichtungen dazu vorgesehen sind, eine mit Bremsen verbundene Arbeitskammer von einer mit einem Bremsflüssigkeitsbehälter verbundenen Versorgungskammer hermetisch zu trennen, wobei die Ventilelementvorrichtungen einen Verschluss (22), der in einer axialen Bohrung (3) des Kolbens (10) beweglich angebracht ist, und ein zum Öffnen/Schließen des Ventilelements (18) vorgesehenes Anlageelement (42) aufweisen, wobei das Anlageelement (42) über ein erstes Ende geklemmt im Körper des Hauptzylinders (2) gehalten ist, **dadurch gekennzeichnet, dass** das Anlageelement (42) durch ein Einsetzen mit Kraft in einen Hohlraum (54) des Körpers des Hauptzylinders (2) in einer ersten Position gehalten ist und dass das Anlageelement (42) in einer zweiten Position mit geringem Spiel in einem zweiten Teil (58) des Hohlraums (54) des Hauptzylinders (2) so gehalten ist, dass die durch die Vibrationen des Anlageelements (42) hervorgerufene Querverlagerung des Anlageelements (42) in Bezug auf die Achse des Hauptzylinders (2) jenseits einer Grenzposition verhindert wird.

2. Hauptzylinder (2) nach Anspruch 1, **dadurch gekennzeichnet, dass** der Hohlraum (54) im Wesentlichen zylindrisch ist und eine Achse (Y) besitzt, die orthogonal zur Achse (X) des Hauptzylinders (2) verläuft.

3. Hauptzylinder (2) nach einem der vorhergehenden Ansprüche, **dadurch gekennzeichnet, dass** das Anlageelement ein Stift (42) ist.

4. Hauptzylinder (2) nach dem vorhergehenden Anspruch, **dadurch gekennzeichnet, dass** der Stift (42) an einem ersten, mit Kraft in den ersten Teil (56) des Hohlraums (54) eingesetzten Ende eine abgerundete Form aufweist, so dass das Einsetzen des ersten Endes des Stifts (42) mit Kraft in den Hohlraum (54) keine Abnutzung des Hohlraums (54) hervorruft.

5. Hauptzylinder nach einem der vorhergehenden Ansprüche, **dadurch gekennzeichnet, dass** der Sekundärkolben durch Formen hergestellt ist und dass der Stift (42) einen Anschlag zur Arretierung des Sekundärkolbens (10) bei einer maximalen Verlagerung des Sekundärkolbens (10) während einer Bremsphase bildet.

6. Hauptzylinder (2) nach dem vorhergehenden Anspruch, **dadurch gekennzeichnet, dass** der Sekundärkolben (10) aus Kunststoff hergestellt ist.

7. Hauptzylinder (2) nach Anspruch 5, **dadurch gekennzeichnet, dass** der Sekundärkolben (10) aus einer Aluminiumlegierung hergestellt ist.
